# EUROPÄISCHE PATENTSCHRIFT

(11) **EP 1 070 165 B1**
(45) Veröffentlichungstag und Bekanntmachung des Hinweises auf die Patenterteilung: **09.07.2003**
(21) Anmeldenummer: 00909131.5
(22) Anmeldetag: 01.02.2000
(51) Int. Cl.: D06F 58/20, D06F 58/28

(54) **Verfahren zum Ansteuern des Antriebsmotors eines Kondensationswäschetrockners**
Process for controlling a drive engine of a condensation clothes drier
Procédé pour controller un moteur d'entraînement d'un seche-linge à condensation

(30) Priorität: 08.02.1999 DE 19904993
(43) Veröffentlichungstag der Anmeldung: 24.01.2001
(73) Patentinhaber: Miele & Cie. KG, 33332 Gütersloh (DE)
(72) Erfinder: JORDING, Wolfhard, D-32584 Löhne (DE)
(86) Internationale Anmeldenummer: EP0000794
(87) Internationale Veröffentlichungsnummer: WO00047810

(56) Entgegenhaltungen:
- EP-A- 0 328 250
- EP-A- 0 763 618
- DE-A- 4 216 106
- GB-A- 2 089 952
- PATENT ABSTRACTS OF JAPAN vol. 018, no. 001 (C-1148), 6. Januar 1994 (1994-01-06) -& JP 05 245294 A (SHARP CORP), 24. September 1993 (1993-09-24)

## Beschreibung

Die Erfindung betrifft ein Verfahren zum Ansteuern des Antriebsmotors eines Kondensationswäschetrockners mit einer drehbar gelagerten Trockentrommel zur Aufnahme der zu trocknenden Wäsche und einem Gebläse zur Förderung der für den Trockenvorgang erforderlichen Prozessluft sowie einem Gebläse zur Erzeugung eines Kühlluftstromes über einen Wärmetauscher zum Entfeuchten der Prozessluft sowie mit einer Sensoranordnung zur Erfassung von Messwerten im Trockenprozess, wobei der Antriebsmotor für wechselnde Drehrichtungen für den Trommelantrieb sowie den Antrieb von Prozess- und Kühtluftgebläse umschaltbar ausgebildet ist und die Programmsteuereinrichtung mit einer Einrichtung zur Ansteuerung des Antriebsmotors ausgebildet ist sowie einen Kondensationswäschetrockner zur Durchführung des Verfahrens.

Bei Kondensationswäschetrocknern kommen sogenannte Einmotorenantriebe zum Einsatz. Dies bedeutet, dass der Trommelantrieb sowie der Betrieb des Kühlluft- und Prozessluftgebläses über einen gemeinsamen Motor erfolgt. in der Regel sind die Gebläse mit geradschaufligen oder vorwärtsgekrümmten Gebläserädern, die in spiralförmigen Gehäusen laufen, realisiert.

Aus der EP 328 250 A1 ist ein Kondensationswäschetrockner bekannt, welcher zwei Gebläseräder mit gekrümmten Gebläseschaufeln aufweist.
Für den Antrieb der Gebläseräder und der Trommel ist ein einziger Antriebsmotor vorgesehen, der für wechselnde Drehrichtungen ausgebildet ist. Die Drehrichtungsumkehr erfolgt periodisch im Verlauf des gesamten Trockenprozesses, um ein Verknäulen der Wäschestücke zu verhindern. Beide Gebläseräder fördern dadurch über den gesamten Trockenprozess zu 90% der Trockenzeit den optimalen Volumenstrom und zu 10% der Trockenzeit den durch die Schaufelausbildung bedingten verringerten Volumenstrom.

Aus der DE 30 39 685 A1 ist ein Wäschetrockner mit einer reversierend antreibbaren Wäschetrommel bekannt, bei dem ein geradschauflig ausgebildetes Gebläserad zur Erzeugung des Prozessluftvolumenstromes in einem symmetrisch ausgebildeten Gebläsegehäuse gelagert ist.

Aus der DE 31 35 289 A1 ist außerdem ein Kondensationswäschetrockner mit einer Gebläseeinheit für ein Kühlluft- und ein Prozessluftgebläse mit einem einzigen Motor bekannt. Der Antrieb für die Drehbewegung der Trommel erfolgt über einen separat angeordneten Antriebsmotor. Die Gebläseräder von Kühlluft- und Prozessluftgebläse sind bei dem dargestellten Beispiel geradschauflig ausgebildet. Ein Nachteil dieser bekannten Ausführung liegt darin, dass das Kühlluftgebläse durch die Anordnung der Gebläseschaufeln in der Erwärmungsphase beim Trockenprogrammstart mit voller Leistung betrieben wird. Dadurch wird in der Erwärmungsphase, in der noch kein hoher Feuchteaustrag aus der Wäsche erfolgt, viel Wärme aus dem Prozessluftkreislauf genommen. Dies hat zur Folge, dass die Erwärmungsphase sowie der gesamte Trockenprozess verlängert und die Energieaufnahme erhöht wird.

Der Erfindung stellt sich somit das Problem, ein Verfahren zum Ansteuern des Antriebsmotors eines Kondensationswäschetrockners derart auszugestalten, dass die Erwärmungsphase im Trockenprozess verkürzt wird und dadurch der Energieverbrauch des gesamten Trockenprozesses reduziert ist.

Erfindungsgemäß wird dieses Problem durch ein Verfahren zum Ansteuern des Antriebsmotors mit den im Patentanspruch 1 angegebenen Merkmalen sowie durch einen Kondensationswäschetrockner nach Anspruch 5 gelöst. Vorteilhafte Ausgestaltungen und Weiterbildungen der Erfindung ergeben sich aus den jeweils nachfolgenden Unteransprüchen.

Bei dem erfindungsgemäßen Verfahren zum Ansteuern des Antriebsmotors wird der Antriebsmotor für die Dauer der Erwärmungsphase bis zum Erreichen eines vorbestimmten Prozesslufttemperaturwertes in der für das Kühlluftgebläse aufgrund der vorwärtsgekrümmten Gebläseradschaufeln falschen Drehrichtung betrieben. Dadurch wird auf einfache Weise erreicht, dass in der Erwärmungsphase, in der noch kein hoher Feuchteaustrag aus der Prozessluft erfolgt, ein geringerer Kühlluftvolumenstrom über den Wärmetauscher geführt wird. Dies bewirkt, dass weniger Wärmeenergie aus der Prozessluft abgeführt und die Aufheizphase und damit der Trockenprozess insgesamt verkürzt wird. Dies hat vorteilhaft einen energiereduzierten Trockenbetrieb zur Folge. Mit dem erfindungsgemäßen Kondensationswäschetrockner sowie dem erfindungsgemäßen Verfahren zur Ansteuerung des Antriebsmotors ist außerdem auch ein Vermeiden von Wäscheaufrollem, welche verstärkt bei Einmotorenantrieben mit überwiegend in Vorzugsdrehrichtung betriebenem Antriebsmotor auftreten, möglich. Wird über die Einrichtung zur Erfassung des Wäschewiderstandes bzw. der Restfeuchte in der Wäsche zu einem frühen Zeitpunkt des Trockenprogramms schon die eingestellte Wäscherestfeuchte sensiert, ist darauf zu schließen, dass ein Wäscheaufroller vorliegt, bzw. dass die Wäsche nicht einen gleichmäßigen Trockengrad im gesamten Wäscheposten erreicht hat. Gemäß dem erfindungsgemäßen Verfahren wird dann von der Vorzugsdrehrichtung des Antriebsmotors auf die Anfangsdrehrichtung umgeschaltet.
Bei dem erfindungsgemäß ausgebildeten Kondensationswäschetrockner bestehen weitere Vorteile insbesondere darin, dass durch die Gebläseausbildung des Prozessluftgebläses mit geradschaufligen Gebläserad ein gleichmäßiger Prozessluftvolumenstrom bei Links- oder Rechtslauf des Antriebsmotors erreicht wird. Das Kühlluftgebläse ist vorteilhaft mit vorwärtsgekrümmten Gebläseschaufeln ausgebildet, wodurch ein optimaler Volumenström in der für das Gebläserad richtigen Drehrichtung und ein verringerter Volumenstrom in der für das Gebläserad falschen Drehrichtung erreicht wird. Betreibt man den Antriebsmotor in der Erwärmungshase in der für das Kühlluftgebläse falschen Drehrichtung (Anfangsdrehrichtung), erfolgt ein geringerer Wärmeaustrag aus dem Prozessluftkreislauf am Wärmetauscher. Durch den Betrieb des Kühlluftgebläses in der falschen Drehrichtung wird außerdem ein wesentlich geräuschärmerer Betrieb in der Erwärmungsphase ermöglicht. Durch die erfindungsgemäße Gebläseausbildung sowie die Ansteuerung des Antriebsmotors wird demnach eine kürzere Aufheizphase und damit ein energiereduzierter sowie ein akustisch leiserer Trockenprozess ermöglicht.

Ein Ausführungsbeispiel der Erfindung ist in den Zeichnungen rein schematisch dargestellt und wird nachfolgend näher beschrieben. Es zeigt
- Figur 1: eine schematische Darstellung von Prozessluftkreislauf und Kühlluftführung in einem Kondensationswäschetrockner,
- Figur 2: eine schematische Darstellung des Prozessluftgebläses (1) mit geradschaufligem Gebläserad (11) und symmetrischem Gebläsegehäuse (10),
- Figur 3: eine schematische Darstellung des Kühlluftgebläses (6) mit vorwärtsgekrümmten Gebläseschaufeln am Gebläserad (13) und spiralförmigen Gebläsegehäuse (12),
- Figur 4: den Volumenstromverlauf bei Rechts- und Linkslauf des Antriebsmotors (7) am Prozessluftgebläse (1),
- Figur 5: den Volumenstromverlauf bei Rechts- und Linkslauf des Antriebsmotors (7) am Kühlluftgebläse (6).

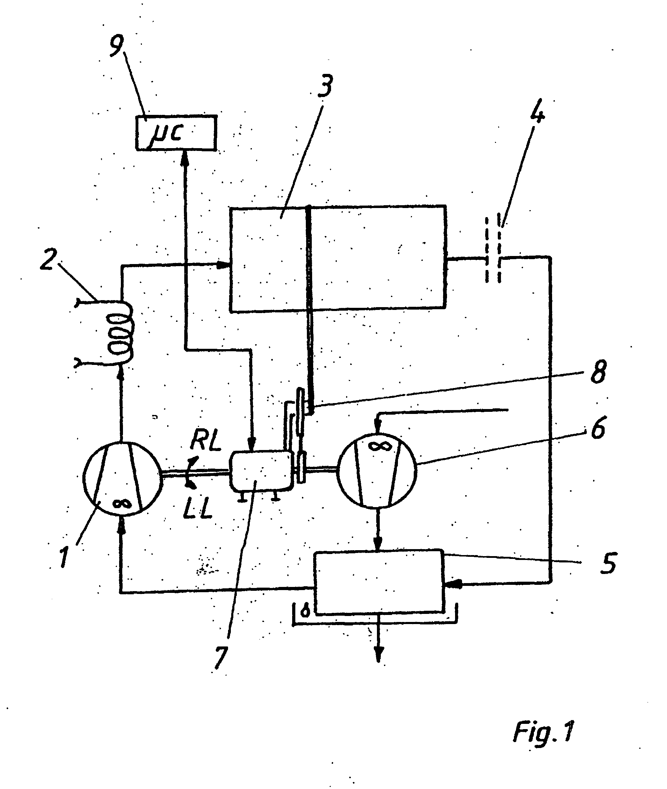

In der Figur 1 ist eine schematische Darstellung von Prozessluftkreislauf und Kühlluftführung in einem Kondensationswäschetrockner gezeigt. Die Prozessluft wird mittels Prozessluftgebläse (1) über die Heizeinrichtung (2) zur drehbar gelagerten Trommel (3) geführt. Danach führt der Prozessluftstrom über ein Flusensieb (4) zum Wärmetauscher (5) der Kondensationseinrichtung. Für den Antrieb der Trommel (3) sowie des Prozessluftgebläses (1) und des Kühlluftgebläses (6) ist ein einziger Antriebsmotor (7) vorgesehen. Die hohe Drehzahl des Antriebsmotors (7) wird zum Antrieb der Trommel (3) über einen Zwischentrieb (8) reduziert. Die Drehzahl am Prozess- und KühKuftgebläse (1, 6) entspricht der Motordrehzahl.

Die Ansteuerung des Antriebsmotors (7) bezüglich Drehzahl und Drehrichtung erfolgt über den Mikrocomputer (9) der Programmsteuereinrichtung.

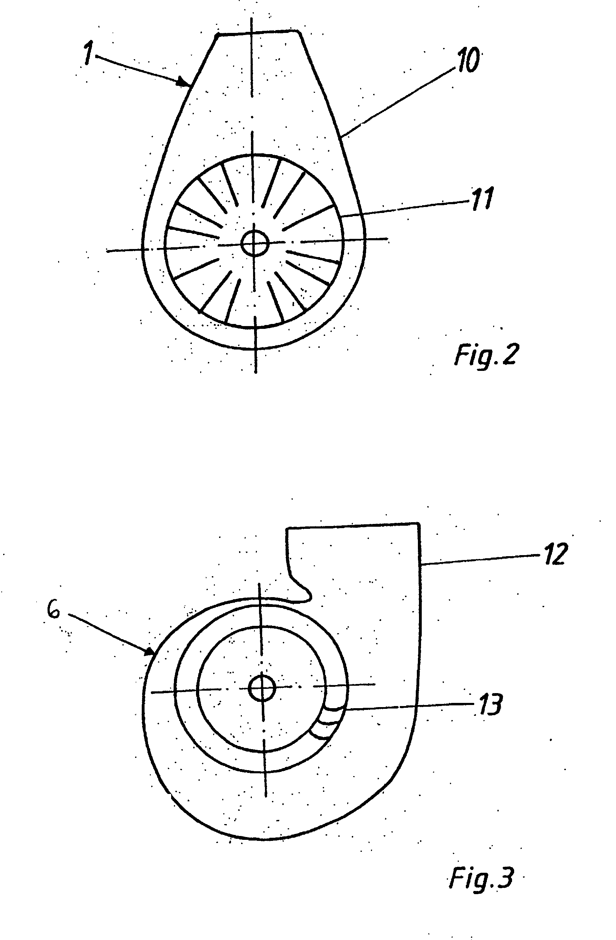

Figur 2 zeigt das Prozessluftgebläse (1) mit einem symmetrischen Gebläsegehäuse (10) und mit geradschauflig ausgebildeten Gebläserad (11). Diese Gebläseausbildung gewährleistet einen gleichmäßig hohen Volumenstrom *V̊* in beiden Drehrichtungen des Antriebsmotors (7).

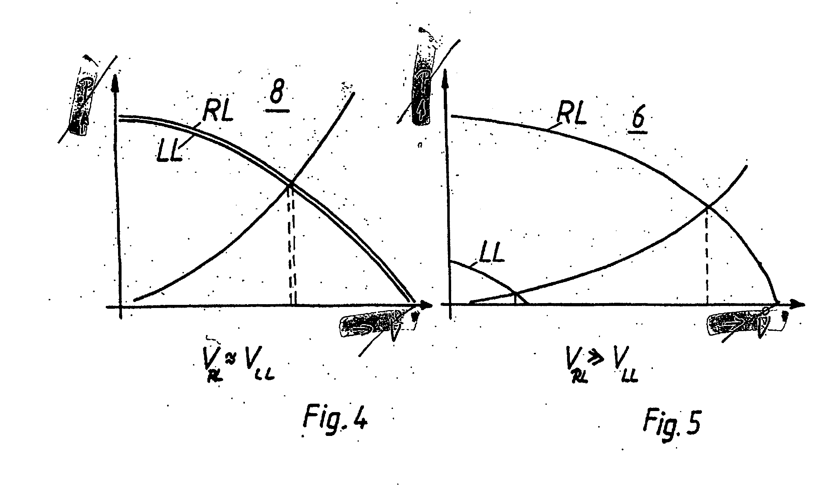

Der Volumenstromverlauf ist in Figur 4 dargestellt.

Figur 3 zeigt das Kühlluftgebläse (6) mit einem spiralförmigen Gebläsegehäuse (12) und einem Gebläserad (13) mit vorwärtsgekrümmten Gebläseschaufeln. Diese Gebläseausbildung bewirkt einen unterschiedlich großen Volumenstrom in den Drehrichtungen des Antriebsmotors (7), da nur in einer Drehrichtung (bzw. in der für das Kühlluftgebläse (6) richtigen Drehrichtung), ein optimaler Volumenstrom erzeugt wird.

Der Volumenstromverlauf ist in Figur 5 dargestellt.

Für den erfindungsgemäß ausgebildeten Wäschetrockner bedeutet das, dass in der Erwärmungsphase für den Trockenprozess der Antriebsmotor (7) in der für das Kühlluftgebläse (6) falschen Drehrichtung betrieben wird, um dadurch einen geringeren Kühlluftstrom über den Wärmetauscher (5) zu führen. Die Ansteuerung des Antriebsmotors zur Drehrichtungsumkehr erfolgt über den Mikrocomputer (9) der Programmsteuereinrichtung entweder zeitgesteuert oder temperaturabhängig. Bei der zeitgesteuerten Ansteuerung erfolgt die Drehrichtungsumkehr nach Ablauf einer im nichtflüchtigen Speicher hinterlegten Zeit für die Erwärmungsphase. Es können mehrere Zeitwerte für die Erwärmungsphase im Speicher für die unterschiedlichen Programmanwahlmöglichkeiten (Pflegeleicht, Koch- Buntwäsche, etc.) und Trockenstufen (Bügelfeucht, Schranktrocken, etc.) hinterlegt sein. Bei der temperaturgesteuerten Ansteuerung zur Drehrichtungsumkehr wird das Erreichen eines Prozesslufttemperaturwertes als Signal zur Ansteuerung zur Drehrichtungsumkehr ausgewertet. Die Sensoren zur Erfassung der Prozesslufttemperaturwerte sind im Prozessluftkanal am Trommeleintritt und/oder Trommelausgang für die Prozessluft angeordnet. Es wird der Prozesslufttemperaturwert kurz vor Erreichen der sogenannten Gleichgewichtsphase im Trockenprozess als Schwellwert zugrunde gelegt. Die Gleichgewichtphase im Trockenprozess ist die Phase, bei der bei annähernd gleichbleibender Prozesslufttemperatur ein maximaler Feuchteaustrag aus der Wäsche erfolgt. Dieser Prozesslufttemperaturwert kennzeichnet das Ende der Erwärmungsphase. Der Antriebsmotor (7) wird in dieser Phase in der für das Kühlluftgebläse (6) richtigen Drehrichtung betrieben, so dass die maximale Entfeuchtung der Prozessluft über den Wärmetauscher (5) erfolgt. Die Ansteuerung des Antriebsmotors (7) zur Drehrichtungsumkehr kann außerdem auch in Abhängigkeit des Restfeuchtegehaltes in der Haupttrockenphase bzw. der Gleichgewichtsphase erfolgen. Wird in dieser Phase zu einem zu frühen Zeitpunkt der eingestellte oder gewünschte Restfeuchtegehalt in der Wäsche sensiert, ist darauf zu schließen, dass sich ein Wäscheaufroller gebildet hat. Als Wäscheaufroller wird ein Wäscheposten bezeichnet, bei dem die Wäschestücke als Wäscheballen in der Trommel bewegt werden. Bei Wäscheaufrollern hat der Rändbereich des Wäschepostens bereits den gewünschten Restfeuchtegehalt erreicht, während das Kernstück noch nicht den gewünschten Trockengrad erreicht hat. In Abhängigkeit des Restfeuchtesignals, welches "End-Restfeuchte erreicht" zu einem zu frühen Zeitpunkt im Trockenprozess liefert, erfolgt die Ansteuerung des Antriebsmotors (7) auf die der Vorzugsdrehrichtung entgegengesetzte Anfangsdrehrichtung.

## Patentansprüche

1. Verfahren zum Ansteuern des Antriebsmotors eines Kondensationswäschetrockners mit einer drehbar gelagerten Trockentrommel (3) zur Aufnahme der zu trocknenden Wäsche und einem Gebläse (1) zur Förderung der für den Trockenvorgang erforderlichen Prozessluft sowie einem Gebläse (6) zur Erzeugung eines Kühlluftstromes über einen Wärmetauscher (5) zum Entfeuchten der Prozessluft sowie mit einer Sensoranordnung zur Erfassung von Messwerten im Trockenprozess, wobei der Antriebsmotor (7) für wechselnde Drehrichtungen für den Trommelantrieb sowie den Antrieb von Prozess- und Kühlluftgebläse umschaltbar ausgebildet ist und die Programmsteuereinrichtung mit einer Einrichtung zur Ansteuerung des Antriebsmotors (7) ausgebildet ist,
**dadurch gekennzeichnet,**
**dass** der Trockenprozess in der Erwärmphase mit einer Anfangsdrehrichtung des Antriebsmotors (7), welche einen durch die Konstruktion des Kühlluftgebläses (6) bestimmten geringeren Kühlluftvolumenstrom über den Wärmetauscher (5) bewirkt, startet
und **dass** die Ansteuerung des Antriebsmotors (7) zur Drehrichtungsumkehr von der Anfangsdrehrichtung auf die Vorzugsdrehrichtung mit maximalen Kühlluftvolumenstrom in Abhängigkeit eines in einem nichtflüchtigen Speicher der Programmsteuereinrichtung hinterlegten Zeitwertes und/oder eines von der Sensoranordnung erfassten Messwertes erfolgt.

2. Verfahren zum Ansteuern des Antriebsmotors nach Anspruch 1,
**dadurch gekennzeichnet,**
**dass** die Ansteuerung zur Drehrichtungsumkehr in Abhängigkeit eines von der Sensoreinrichtung zur Erfassung der Prozesslufttemperatur erfassten Signals erfolgt, welches das Ende der Erwärmungsphase für den Trockenprozess kennzeichnet.

3. Verfahren zum Ansteuern des Antriebsmotors nach Anspruch 1,
**dadurch gekennzeichnet,**
**dass** die Ansteuerung zur Drehrichtungsumkehr zeitgesteuert über die Programmsteuereinrichtung in Abhängigkeit von in einem nichtflüchtigen Speicher hinterlegten Zeitwerten erfolgt.

4. Verfahren zum Ansteuern des Antriebsmotors nach Anspruch 1 und 3,
**dadurch gekennzeichnet,**
**dass** die Ansteuerung zur Drehrichtungsumkehr in Abhängigkeit eines von der Sensoreinrichtung zur Erfassung des Widerstandes der Wäsche erfassten Signals in Abhängigkeit der Restfeuchte in der Wäsche erfolgt.

5. Kondensationswäschetrockner zur Durchführung des Verfahrens zum Ansteuern des Antriebsmotors für den Trockenprozess nach mindestens einem der Ansprüche 1 bis 4, mit einer drehbar gelagerten Trockentrommel (3) zur Aufnahme der zu trocknenden Wäsche und einem Gebläse (1) zur Förderung der für den Trockenvorgang erforderlichen Prozeßluft sowie einem Gebläse (6) zur Erzeugung eines Kühlluftstromes über einen Wärmetauscher (5) zum Entfeuchten der Prozeßluft sowie mit einer Sensoranordnung zur Erfassung von Meßwerten im Trockenprozeß, wobei der Antriebsmotor (7) für wechselnde Drehrichtungen für den Trommelantrieb sowie den Antrieb von Prozeßund Kühlluftgeblase umschaltbar ausgebildet ist und die Programmsteuereinrichtung mit einer Einrichtung zur Ansteuerung des Antriebsmotors (7) ausgebildet ist,
**dadurch gekennzeichnet,**
**dass** das Prozessluftgebläsegehäuse (10), in dem ein geradschaufliges Gebläserad (11) gelagert ist, symmetrisch ausgebildet ist,
**dass** das Kühlluftgebläsegehäuse (12), in dem ein Gebläserad (13) mit vorwärtsgekrümmten Gebläseschaufeln gelagert ist, spiralförmig ausgebildet ist,
**dass** die Vorwärtskrümmung der Gebläseschaufeln sowie das spiralförmige
Gebläsegehäuse (12) die Vorzugsdrehrichtung des Antriebsmotors (7) für einen maximalen Volumenstrom des Kühlluftgebläses (6) bestimmt
und **dass** die Programmsteuereinrichtung für die temperaturgesteuerte oder zeitgesteuerte und/oder restfeuchtegesteuerte Ansteuerung zur Drehrichtungsumkehr ausgebildet ist,
und **dass** die Programmiersteuereinrichtung so ausgebildet ist, dass der Trockenprozeß in der Erwärmphase mit einer Anfangsdrehrichtung, welche einen durch die Konstruktion des Kühiluftgebläses (6) bestimmten geringeren Kühlluftvolumenstrom über den Wärmetauscher (5) bewirkt, startet.

6. Kondensationswäschetrockner nach Anspruch 5,
**dadurch gekennzeichnet,**
**dass** als Sensoranordnung zur Erfassung von Messwerten im Trockenprozess für die Ansteuerung zur Drehrichtungsumkehr eine Einrichtung zur Erfassung der Prozesslufttemperatur im Prozessluftkanal angeordnet ist.

7. Kondensationswäschetrockner nach Anspruch 5,
**dadurch gekennzeichnet,**
**dass** als Sensoranordnung Sensoren zur Erfassung der Prozesslufttemperaturwerte im Prozessluftkanal am Trommeleintritt und Trommelausgang für die Prozessluft angeordnet sind.

8. Kondensationswäschetrockner nach Anspruch 5,
**dadurch gekennzeichnet,**
**dass** als Sensoranordnung zur Erfassung von Messwerten im Trockenprozess für die Ansteuerung zur Drehrichtungsumkehr eine Einrichtung zur Erfassung des Widerstandes der Wäsche in Abhängigkeit der Restfeuchte in der Wäsche vorgesehen ist.

## Claims

1. Method of actuating the drive motor of a condenser-type laundry drier, having a rotatably mounted drying drum (3) for accommodating the laundry to be dried and a fan (1) for conveying the process air, required for the drying process, as well as a fan (6) for generating a flow of cooling air via a heat exchanger (5) for dehumidifying the process air and a sensor arrangement for detecting measurement values in the drying process, the drive motor (7) being adapted to be switchable for alternating directions of rotation for the driving of the drum as well as for the driving of process air and cooling air fans, and the program control device being provided with a device for actuating the drive motor (7), **characterised in that** the drying process in the heating phase starts with an initial direction of rotation of the drive motor (7), which direction produces a smaller volumetric flow of cooling air, determined by the design of the cooling air fan (6), via the heat exchanger (5), and **in that** the actuation of the drive motor (7) for reversing the direction of rotation from the initial direction of rotation to the preferred direction of rotation is effected with a maximum volumetric flow of cooling air in dependence on a time value input in a non-volatile memory of the program control device and/or on a measurement value detected by the sensor arrangement.

2. Method of actuating the drive motor according to claim 1, **characterised in that** the actuation for reversing the direction of rotation is effected in dependence on a signal, which is detected by the sensor device for detecting the process air temperature and denotes the end of the heating phase for the drying process.

3. Method of actuating the drive motor according to claim 1, **characterised in that** the actuation for reversing the direction of rotation is effected in a time-controlled manner via the program control device in dependence on time values input in a non-volatile memory.

4. Method of actuating the drive motor according to claims 1 and 3, **characterised in that** the actuation for reversing the direction of rotation is effected in dependence on a signal, which is detected by the sensor device for detecting the resistance of the laundry, in dependence on the residual moisture in the laundry.

5. Condenser-type laundry drier for accomplishing the method of actuating the drive motor for the drying process according to at least one of claims 1 to 4, having a rotatably mounted drying drum (3) for accommodating the laundry to be dried and a fan (1) for conveying the process air, required for the drying process, as well as a fan (6) for generating a flow of cooling air via a heat exchanger (5) for dehumidifying the process air and a sensor arrangement for detecting measurement values in the drying process, the drive motor (7) being adapted to be switchable for alternating directions of rotation for the driving of the drum as well as for the driving of process air and cooling air fans, and the program control device being provided with a device for actuating the drive motor (7), **characterised in that** the process air fan housing (10), in which a straight-bladed fan wheel (11) is mounted, has a symmetrical configuration, **in that** the cooling air fan housing (12), in which a fan wheel (13) having forwardly bent fan blades is mounted, has a helical configuration, **in that** the forward bending of the fan blades as well as the helical fan housing (12) determine the preferred direction of rotation of the drive motor (7) for a maximum volumetric flow of the cooling air fan (6), and **in that** the program control device is provided for the temperature-controlled or time-controlled and/or residual moisture-controlled actuation for reversing the direction of rotation, and **in that** the program control device is so configured that the drying process starts in the heating phase with an initial direction of rotation which produces a smaller volumetric flow of cooling air, determined by the design of the cooling air fan (6), via the heat exchanger (5).

6. Condenser-type laundry drier according to claim 5, **characterised in that** a device for detecting the process air temperature is disposed in the process air duct as the sensor arrangement for detecting measurement values in the drying process for the actuation for reversing the direction of rotation.

7. Condenser-type laundry drier according to claim 5, **characterised in that** sensors for detecting the process air temperature values are disposed as the sensor arrangement in the process air duct at the drum inlet and drum outlet for the process air.

8. Condenser-type laundry drier according to claim 5, **characterised in that** a device for detecting the resistance of the laundry in dependence on the residual moisture in the laundry is provided as the sensor arrangement for detecting measurement values in the drying process for the actuation for reversing the direction of rotation.

## Revendications

1. Procédé pour commander le moteur d'entraînement d'un sèche-linge à condensation équipé d'un tambour de séchage (3) monté de façon à pouvoir tourner et destiné à recevoir le linge à sécher et d'un ventilateur (1) pour faire circuler l'air de traitement nécessaire au processus de séchage, ainsi que d'un ventilateur (6) pour produire un flux d'air de refroidissement par le biais d'un échangeur thermique (5) afin d'assécher l'air de traitement, et d'un dispositif de captage pour relever des valeurs de mesure au cours du processus de séchage, sachant que le moteur d'entraînement (7) est réalisé de manière à pouvoir être commuté, afin de pouvoir entraîner le tambour ainsi que le ventilateur pour l'air de traitement et de refroidissement dans les deux sens de rotation, et que le dispositif de commande par programme est réalisé équipé d'un dispositif pour commander le moteur d'entraînement (7), **caractérisé en ce que** le processus de séchage débute, dans la phase de chauffage, par un sens de rotation initial du moteur d'entraînement (7) qui génère, par le biais de l'échangeur thermique (5), un flux d'air de refroidissement défini moindre en raison de la construction du ventilateur (6) pour l'air de refroidissement, et **en ce que** la commande du moteur d'entraînement (7), pour inverser le sens de rotation et passer du sens de rotation initial au sens de rotation préférentiel avec flux d'air de refroidissement maximal, s'effectue en fonction d'une valeur de temps mémorisée dans une mémoire non volatile du dispositif de commande par programme et/ou d'une valeur de mesure relevée par le dispositif de captage.

2. Procédé pour commander le moteur d'entraînement selon la revendication 1, **caractérisé en ce que** la commande de l'inversion du sens de rotation intervient en fonction d'un signal relevé par le dispositif de captage destiné à relever la température de l'air de traitement, qui marque la fin de la phase de chauffage pour le processus de séchage.

3. Procédé pour commander le moteur d'entraînement selon la revendication 1, **caractérisé en ce que** la commande de l'inversion du sens de rotation est déclenchée périodiquement par le biais du dispositif de commande par programme, en fonction de valeurs de temps mémorisées dans une mémoire non volatile.

4. Procédé pour commander le moteur d'entraînement selon les revendications 1 et 3, **caractérisé en ce que** la commande de l'inversion du sens de rotation intervient en fonction d'un signal relevé par le dispositif de captage destiné à relever la résistance du linge, laquelle dépend de l'humidité résiduelle du linge.

5. Sèche-linge à condensation pour mettre en oeuvre le procédé pour commander le moteur d'entraînement pour le processus de séchage selon au moins l'une des revendications 1 à 4, qui est équipé d'un tambour de séchage (3) monté de façon à pouvoir tourner et destiné à recevoir le linge à sécher et d'un ventilateur (1) pour faire circuler l'air de traitement nécessaire au processus de séchage, ainsi que d'un ventilateur (6) pour produire un flux d'air de refroidissement par le biais d'un échangeur thermique (5) afin d'assécher l'air de traitement, et d'un dispositif de captage pour relever des valeurs de mesure au cours du processus de séchage, sachant que le moteur d'entraînement (7) est réalisé de manière à pouvoir être commuté, afin de pouvoir entraîner le tambour ainsi que le ventilateur pour l'air de traitement et de refroidissement dans les deux sens de rotation, et que le dispositif de commande par programme est réalisé équipé d'un dispositif pour commander le moteur d'entraînement (7), **caractérisé**
**en ce que** le carter (10) du ventilateur produisant le flux d'air de traitement, dans lequel est monté une roue de ventilateur (11) à pales droites, est réalisé de façon symétrique, en ce que le carter (12) du ventilateur produisant le flux d'air de refroidissement, dans lequel est monté une roue de ventilateur (13) à pales courbées vers l'avant, est réalisé en forme de spirale,
**en ce que** la courbure vers l'avant des pales du ventilateur, ainsi que le carter de ventilateur en forme de spirale (12) conditionnent le sens de rotation préférentiel du moteur d'entraînement (7) pour que le ventilateur (6) générant l'air de refroidissement produise un flux d'air maximal,
**en ce que** le dispositif de commande par programme est réalisé de manière à commander l'inversion du sens de rotation en fonction de la température, du temps et/ou de l'humidité résiduelle,
et **en ce que** le dispositif de commande par programme est réalisé de telle sorte que le processus de séchage débute, dans la phase de chauffage, par un sens de rotation initial du moteur d'entraînement qui génère, par le biais de l'échangeur thermique (5), un flux d'air de refroidissement défini moindre en raison de la construction du ventilateur (6) pour l'air de refroidissement.

6. Sèche-linge à condensation selon la revendication 5, **caractérisé en ce qu'**un dispositif pour relever la température de l'air de traitement est disposé dans le conduit d'air de traitement, en tant que dispositif de captage pour relever des valeurs de mesure au cours du processus de traitement, qui sont destinées à la commande de l'inversion du sens de rotation.

7. Sèche-linge à condensation selon la revendication 5, **caractérisé en ce que** des capteurs sont disposés dans le conduit d'air de traitement, à l'endroit où l'air de traitement entre et sort du tambour, qui font office de dispositif de captage pour relever des valeurs de température de l'air de traitement.

8. Sèche-linge à condensation selon la revendication 5, **caractérisé en ce qu'**un dispositif pour relever la résistance du linge en fonction de l'humidité résiduelle contenue dans le linge est disposé en tant que dispositif de captage pour relever des valeurs de mesure au cours du processus de séchage, qui sont destinées à la commande de l'inversion du sens de rotation.
